# EUROPÄISCHE PATENTANMELDUNG

(11) **EP 1 000 989 A2**
(43) Veröffentlichungstag der Anmeldung: **17.05.2000**
(21) Anmeldenummer: 99121968.4
(22) Anmeldetag: 09.11.1999
(51) Int. Cl.: C09D 183/04, C09D 183/07

(54) **Formtrennmittel**

(30) Priorität: 11.11.1998 DE 19851945
(71) Anmelder: Rhein Chemie Rheinau GmbH, 68219 Mannheim (DE)
(72) Erfinder: Grape, Wolfgang, Dr., 51061 Köln (DE); Krott, Jürgen, 51371 Leverkusen (DE); Zillmer, Frank-Rainer, 51379 Leverkusen (DE); Wagner, Herbert, 46669 Bad Schönborn (DE); Schumacher, Karl-Heinz, 68789 St. Leon-Rot (DE); Scholand, Bernhard, 68782 Brühl (DE)
(74) Vertreter: Feldhues, Michael L.F., Dr.

(57) **Zusammenfassung**

Die Erfindung betrifft ein füllstofffreies Formtrennmittel umfassend eine wässrige Emulsion enthaltend miteinander vernetzende Silicon-Systeme und Kieselsol. Das Formtrennmittel ist insbesondere als Trennmittel bei der Reifenherstellung geeignet.

## Beschreibung

Die Erfindung betrifft ein füllstofffreies Formtrennmittel umfassend eine wäßrige Emulsion untereinander vernetzender Silikonsysteme und Kieselsol, welches zusätzlich der behandelten Oberfläche gute Gleiteigenschaften verleiht. Das Formtrennmittel ist insbesondere als Trennmittel bei der Reifenherstellung und anderer Gummiartikeln geeignet und kommt dort bei der Formung und Vulkanisation dieser Artikel zum Einsatz.

Nach dem Stand der Technik werden Reifen geformt und vulkanisiert, indem der Reifenrohling in eine Form eingelegt und mit einer Heizmembrane (Bladder, Blase) gegen diese Form gepreßt wird, wobei er durch Hitzeeinwirkung vulkanisiert. Die Heizmembrane muß im Rohling gleiten und nach der Vulkanisation von dem Reifen getrennt werden können. Daher werden die Reifenrohlinge in eine Sprühkabine eingebracht, in der sie mittels einer mechanischen Vorrichtung in Rotation versetzt werden. In diese rotierenden Rohlinge wird eine Sprühpistole eingefahren, mit der eine Trennmittellösung in den Rohlingen verteilt wird. Der Overspray wird meistens über eine Wasserwand entfernt und in dem Wasser aufgenommen. Anschließend erfolgt die Formung und Vulkanisation des Rohlings in einer Vulkanisationspresse mittels der Heizmembrane, welche die Aufgabe hat, den Reifenrohling zu beheizen und den Reifen mit hohem Druck in die Negativformen zu drücken.

Wäßrige Organopolysiloxanemulsionen und deren Verwendung als Trennmittel bei der Reifenformung und -vulkanisation sind aus dem Stand der Technik bekannt. Die US-A- 4 184 880 beschreibt Trennmittelemulsionen, die jedoch größere Mengen an anorganischen Silikaten als Füllstoff enthalten, die - um ihre Oberfläche zu hydrophobieren - mit Organosilikonverbindungen behandelt worden sind.

Die US-A-4 431 452 beschreibt eine wäßrige Trennmittelzusammensetzung bestehend aus:
1) einem SiOH-endgestoppten Polydimethylsiloxan mit einer Viskosität bis zu 25.000.000 Centistokes bei 25°C;
2) einem SiOH-endgestoppten Polydimethylsiloxan mit einer Viskosität bis zu 120.000 Centistokes bei 25°C;
3) einem Polyalkylenglykol;
4) einem Bentonitton; und
5) einem oberflächenaktiven Mittel.

Die US-A-4 359 340 beschreibt wäßrige Trennmittelzubereitungen für die Verwendung bei der Reifenformung. Die Emulsionen bestehen aus:
1) einem Polydimethylsiloxan mit einer Viskosität bis zu 25.000.000 Centistokes bei 25°C;
2) einem Methylhydrogensilan mit einer Viskosität 20 bis 40 Centistokes oder einem Dimethythydrogensilan mit einer Viskosität von 80 bis 120 Centistokes;
3) einem Metallsalz einer organischen Säure; und
4) einem oberflächenaktiven Mittel.

Die EP-A-0 279 372 beschreibt wäßrige Organopolysiloxanemulsionen, die als Trennmittel bei der Reifenformung und -vulkanisation und insbesondere zur Beschichtung des Bladders verwendet werden können und die zusammengesetzt sind aus:
1) ein SiOH-endgestopptes Polydimethylsiloxanpolymer mit einer Plastizität von 50 bis 100;
2) ein Organohydrogenpolysiloxan mit durchschnittlich mindestens 2 Si-gebundenen Wasserstoffatomen per Molekül;
3) ein Schmiermittel mit einem Schmelzpunkt von 25 bis 80°C;
4) ein anorganisches Silikat (Mica);
5) ein Verdickungsmittel;
6) ein oberflächenaktives Mittel; und
7) Wasser.

Nachteile der bislang beschriebenen wäßrigen Trennmittelzusammensetzungen sind zum einen, daß sie relativ große Mengen an anorganischen Silikaten als Füllstoff enthalten, die sich negativ auf die Stabilität der Emulsionen auswirken, zum anderen, daß sie über eine Reaktion einer SiOH-Gruppe mit SiH unter Wasserstoffabspaltung vernetzen, was aus Gründen der Explosionsgefährdung nicht erwünscht ist.

Die EP-A-0 635 559 beschreibt eine Trennmittelzusammensetzung für die Reifenformung, die ohne die unerwünschte Wasserstoffentwicklung auskommt. Die beschriebene Emulsion wird zur Beschichtung des Bladders verwendet und besteht aus
1) mindestens einem nichtreaktiven Polydimethylsiloxan mit einer kinematischen Viskosität zwischen 50 und 30.000.000 mm s⁻¹ bei 25°C;
2) mindestens einem reaktiven Polydimethylsiloxan mit einer kinematischen Viskosität zwischen 15 und 5.000.000 mm s⁻¹;
3) einem Vernetzer;
4) einem oberflächenaktiven Mittel; und
5) Wasser.

Die EP-A-0 111 100 beschreibt ein Trennmittel für die Reifenherstellung auf Silikonbasis, welches nicht nur in einem organischen Lösungsmittel gelöst ist und so zur Anwendung kommen soll, sondern welches zudem Kaolin, Kreide, Steinmehl, Kieselsäuren, Ruß oder Graphit enthalten muß, sollte die Heizmembran nicht schon von vorne herein eine solche Rauhigkeit aufweisen, daß eine ausreichende Luftableitung gewährleistet ist.

Mit Schmierstoffen alleine, z.B. Si-Ölen oder Si-Öl-Emulsionen, kann man ausreichende Gleit- und Trennwirkung erzielen aber leider keine totale 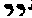 Entlüftung" - Luftabfuhr zwischen Heizbalg und Reifenrohling.

Eingeschlossene Luft bedeutet Ausschußreifen, da unter der Luftblase keine ausreichende Vulkanisation stattfindet.

Die Füllstoffe (mineralisch oder andere) werden als Abstandhalter zwischen Bladder und Reifenrohling benötigt, damit die Luft vor der Vulkanisierung entweichen kann.

Hauptsächlich wegen der Entlüftung war es nicht möglich, füllstofffreies Innenlösungen, die nur aus Trennmittel- bzw. Gleitmittelkombinationen bestehen, zu verwenden. Die Füllstoffe erfüllten dabei die Funktion eines Abstandhalters zwischen dem Innenliner des Reifenrohlings und dem Heizbalg.

Bei der Verwendung von herkömmlichen Silikonölen kam es bisher zu lästigen Separationen an den Reifenstößen.

Nach wie vor bestand demnach ein Bedarf an einem wäßrigen lösungsmittelfreien Trennmittel, das in die Innenseite des Reifenrohlings und/oder die Oberfläche des Heizbalgs aufgesprüht werden kann und dabei allen Erfordernissen der Vulkanisation, nämlich dem Gleiten, Trennen und Entlüften, gerecht wird, und das gleichzeitig die oben beschriebenen Nachteile - wie Füllstoffgehalt und/oder Vernetzung durch Wasserstoffabspaltung - nicht aufweist. Ferner sollten die Separationen an den Reifenstößen vermieden werden.

Die Erfindung betrifft Formtrennmittel umfassend in einer wässrigen Emulsion
- ein aus wenigstens zwei miteinander unter Vernetzung reagierenden Silicon-Komponenten bestehenden System, wobei dieses System ausgewählt ist aus der Gruppe bestehend aus
   (A) miteinander unter Kondensation reagierenden Silicon-Komponenten, oder
   (B) miteinander unter Addition reagierenden Silicon-Komponente,
   und
- einer wässrig-kolloidalen Kieselsäure (Kieselsol).

Dementsprechend betrifft die Erfindung auch ein Verfahren zur Vulkanisation von Reifen, welches dadurch gekennzeichnet ist, daß vor der Vulkanisation die erfindungsgemäße Formtrennmittelzusammensetzung auf den Heizbalg und/oder die Reifenoberfläche aufgetragen wird.

Das erfindungsgemäße Verfahren ist äußerst umweltfreundlich, da es gegenüber den herkömmlichen Verfahren des Standes der Technik mit ca. 10 % des wirksamen Festkörpers an Trennsubstanz auskommt und dementsprechend insgesamt wirtschaftlicher ist.

Bei den erfindungsgemäß unter Vernetzung reagierenden Silicon-Systemen (A) bzw. (B) handelt es sich um Gemische von Emulsionen von unter Kondensation miteinander reagierenden (vernetzenden) Silicon-Komponenten (A) bzw. um Gemische von Emulsionen von unter Addition miteinander reagierenden (vernetzenden) Silicon-Komponenten (B), die nachfolgend näher beschrieben werden. Beide Reaktionssysteme werden durch geeignete Katalysatoren katalysiert.

### A. Unter Kondensation miteinander vernetzende Silicon-Systeme

Bei diesen Systemen handelt es sich um Gemische von wässrigen Emulsionen von Si-OH endgestoppten Polydimethylsiloxanen (A-1) und alkoxyfünktionellen Siliconen (A-2).

Die Emulsion des Si-OH endgestoppten Polydimethylsiloxans (A-1) enthält das Siloxan in einer Menge von 20 bis 80 Gew.-%, vorzugsweise von 30 bis 60 Gew.-%, bezogen auf die Emulsion A-1.

Die Emulsion des zur Vernetzung befähigen alkoxyfünktionellen Silicons (A-2) enthält das Siloxan in einer Menge von 20 bis 80 Gew.-%, vorzugsweise von 25 bis 60 Gew.-%, bezogen auf die Emulsion A-2.

Die beiden Emulsionen werden in einem Mengenverhältnis A-1:A-2 von 20:80 bis 80:20, vorzugsweise von 40:60 bis 60:40 miteinander gemischt. Selbstverständlich enthalten beide Emulsionen, die durch deren Herstellung bedingten geeigneten Emulgatoren.

Die Emulsion A, hergestellt aus Emulsion A-1 und Emulsion A-2, enthält 20 bis 80 Gew.-%, vorzugsweise 30 bis 60 Gew.-% Silicon, bezogen auf die Emulsion A.

### A-1: Emulsionen Si-OH endgestoppter Polydimethylsiloxane:

Bei den Si-OH endgestoppten Polydimethylsiloxanen handelt es sich um Polymere der allgemeinen Formel I

HO[Si(CH₃)₂-O]ₚH (I)

mit p = 400 bis 3000, vorzugsweise 800 bis 2000.

Die Herstellung der Emulsionen eines langkettigen OH-endgestoppten Siliconöls durch Emulsionspolymerisation ist dem Fachmann beispielsweise aus der US-A-2 891 920, oder der GB-A-1 024 024 bekannt. Besonders bevorzugt ist das in der GB-A-1 024 024 offenbarte Verfahren, eine Alkylbenzolsulfonsäure als Katalysator einzusetzen, da hier Emulgator und Polymerisationskatalysator in einem vorliegen. Nach erfolgter Polymerisation wird die Säure neutralisiert, so daß im Anschluß die Katalysatoreigenschaften blockiert sind, während die Emulgiermitteleigenschaften voll erhalten bleiben, bzw. eher verbessert werden. Dementsprechend kann die Emulgiermittelkonzentration gering gehalten werden, und man hat nach Fertigstellung der Emulsion keine störenden Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer sowie anionischer Natur sein. Als anionisehe Co-Emulgatoren kommen insbesondere Salze der obengenannten n-Alkyl- oder Alkylbenzolsulfonsäuren in Frage. Nichtionogene Co-Emulgatoren sind Polyoxyethylenderivate von Fettalkoholen, Fettsäuren und dgl. Beispiele für derartige Emulgiermittel sind POE (3)-Laurylalkohol, POE (20)-Oleylalkohol, POE (7)-Nonylphenol oder POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt). Derartige nichtionogene Emulgiermittel sind dem Fachmann im Prinzip geläufig. Die zugesetzten Co-Emulgatoren erhöhen einerseits die Stabilität der nach der Emulsionspolymerisation resultierenden Emulsion, andererseits üben sie aber gleichzeitig einen Einfluß aus auf die Keifenlänge des bei der Polymerisation entstehenden langkettigen, OH-endgestoppten Siliconöls.

Im allgemeinen sind solche Siliconöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-endgestoppten Siliconöls erfolgt weiterhin über die Temperatur bei der Gleichgewichtsbildung zwischen Siloxan, Wasser und dem durch Ringöffnung des Siloxans zunächst gebildeten Silanol.

Besonders bevorzugt bei der Herstellung einer Emulsion eines langkettigen OH-endgestoppten Siliconöls ist das im folgenden beschriebene Verfahren.

Als Monomer wird Octamethylcyclotetrasiloxan (D 4) in einer solchen Menge eingesetzt, daß eine 40 %ige Emulsion resultiert. Die für die Emulsionspolymerisation katalytisch wirkende Sulfonsäure ist eine n-Alkylsulfonsäure. Von dieser Sulfonsäure werden 4 %, bezogen auf die D 4-Menge eingesetzt. Als Co-Emulgatoren dienen das Na-Salz der als Katalysator verwendeten Sulfonsäure sowie POE (5)-Laurylalkohol. Die Temperatur bei der Emulsionspolymerisation beträgt 60°C, neutralisiert wird mit Triethanolamin.

Bei einer besonders bevorzugten Emulsion eines endgestoppten Polydimethylsiloxans handelt es sich um eine 40 gew.-%ige Emulsion eines Polydimethylsiloxans der Formel I, in der p zwischen 800 und 2000 liegt.

### A-2: Emulsionen von alkoxyfunktionellen Siliconölen:

Das in der erfindungsgemäßen Emulsion A-2 enthaltene und zur Vernetzung befähigte alkoxyfunktionelle Siliconöl besteht aus Einheiten der allgemeinen Struktur

RₙR'ₘSiO₍₄₋ₙ₋ₘ₎₂ (II)

worin
- R: gleiche oder verschiedene, gegebenenfalls substituierte Kohlenwasserstoffreste oder Kohlenwasserstoffoxyreste mit jeweils 1 bis 18 Kohlenstoffatomen,
- R': gleiche oder verschiedene, Si-C-gebundene, polare Gruppen enthaltende substituierte Kohlenwasserstoffreste
- n: eine ganze Zahl im Wert von 0, 1, 2 oder 3,
- m: eine ganze Zahl im Wert von 0, 1, 2 oder 3
bedeuten, und die Summe n + m einen durchschnittlichen Wert von 1,8 bis 2,2 besitzt und m so gewählt ist, daß das Polyorganosiloxan mindestens einen Rest R' aufweist.

Vorzugsweise besitzt die Summe n + m einen durchschnittlichen Wert von 1,9 bis 2,1. Beispiele für Kohlenwasserstoffreste R sind Alkylreste, wie der Methyl-, Ethyl-n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecytreste, wie der n-Octadecylrest; Alkenylreste, wie der Vinyl-, Allyl- und der 5-Hexen-1-ylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzyl-Rest, der alpha- und der β-Phenylethylrest.

Beispiele für gegebenenfalls substituierte Kohlenwasserstoffoxyreste R sind über ein direkt an ein Siliciumatom gebundenes Sauerstoffatom gebundene substituierte und unsubstituierte Kohlenwasserstoffreste R gemäß den vorstehend genannten Beispielen, insbesondere Alkoxyreste mit 1 bis 18 Kohlenstoffatomen und Phenoxyreste, speziell der Methoxy-, Ethoxy-, n-Propoxy-, iso-Propoxy- und Phenoxyrest. Vorzugsweise sind höchstens 10 % der Reste R gegebenenfalls substituierte Kohlenwasserstoffoxyreste.

Vorzugsweise sind die Reste R Methyl-, Ethyl-, Phenyl-, Methoxy- und/oder Vinylreste. Wegen der leichteren Zugänglichkeit sind vorzugsweise 50 % der Reste R, insbesondere mindestens 80 % der Reste R, Methylreste.

R' kann ausgewählt sein aus der Gruppe der Reste R. Bevorzugt ist R' ausgewählt aus der Gruppe der aminofunktionellen Kohlenwasserstoffreste, beispielsweise Aminoalkylreste, wie der γ-Aminopropylrest und der β-Aminoethyl-γ-aminopropylrest; Aminoarylreste; Si-C-gebundene, cyclische, aminofunktionelle Reste.

Beispiele für bevorzugte aminofünktionelle Reste R' sind Reste der allgemeinen Formel

-R¹-[NR²(CH₂)ₐ]_{b}NHR² (III)

wobei
- R¹: einen zweiwertigen C₁- bis C₁₈-Kohlenwasserstoffrest bedeutet,
- R²: ein Wasserstoffatom oder einen gegebenenfalls substituierten C₁- bis C₁₈-Kohlenwasserstoffrest bedeutet,
- a: die Werte 2, 3, 4, 5 oder 6 hat und
- b: die Werte 0, 1, 2, 3 oder 4 hat.

Beispiele für die zweiwertigen C₁ - C₁₈-Kohlenwasserstoffreste R¹ sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenreste, wobei der n-Propylenrest und der 2-Methylpropylenrest besonders bevorzugt sind.

Beispiele für die gegebenenfalls substituierten C₁- bis C₁₈-Kohlenwasserstoffreste R² sind die für R angegebenen Beispiele.

In der vorstehenden allgemeinen Formel (III) bedeuten vorzugsweise
- R¹: einen zweiwertigen C₂- bis C₆-Kohlenwasserstoffrest,
- R²: ein Wasserstoffatom, einen Methyl- oder Cyclohexylrest
- a: die Werte 2 oder 3 und
- b: die Werte 0 oder 1.

Besonders bevorzugt als zur Vernetzung befähigte alkoxyfunktionelle Silicone, die auch Aminogruppen enthalten, sind teilverzweigte Polydimethylsiloxane der Struktur 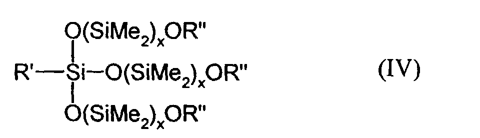
mit R' = H₂N(CH₂)₂NH(CH₂)₃- oder H₂N(CH₂)₃-
und R'' = C₂H₅ oder 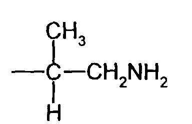
sowie Me = CH₃, x = 20 bis 200

Zur Herstellung derartiger Verbindungen sowie geeigneter Emulgatoren wird auf die EP-A-0 646 618 verwiesen.

Die das zur Vernetzung befähigte alkoxyfunktionelle Silicon enthaltende Emulsion kann ferner noch 2 bis 20 Gew.-%, vorzugsweise 5 bis 15 Gew.-% eines alkoxyfunktionellen Siliconharzes der Formel V

R³_{d}Si(OR⁴)ₑO_{(4-d-e)/2} (V)

wobei
- R³: ein einwertiger Kohlenwasserstoffrest mit 1 bis 14 C-Atomen, vorzugsweise der Methylrest ist,
- R⁴: ein einwertiger Kohlenwasserstoffrest mit 1 bis 18 C-Atomen, vorzugsweise der Methylrest, ist und
- d: einen Wert von 0,75 bis 1,5, vorzugsweise etwa 1, und
- e: einen Wert von 0,2 bis 2, vorzugsweise 0,4 bis 1,2, besitzt.

Die Viskosität dieses Harzes beträgt 2 bis 2000, vorzugsweise 20 bis 200 mPa·s.

Die Herstellung dieser alkoxyfünktionellen Siliconharze ist bekannt und erfolgt durch Reaktion von entsprechenden Alkyl- und/oder Arylchlorsilanen mit Alkohol und Wasser (vgl. z.B. GB-A-685 173, DE-A-958 702, FR-A-1 475 709, US-A-3 668 180, DE-A-2 061 189, DE-A-2 444 529, DE-A-2 532 887, EP-A-0 003 610, DE-A-3 000 782).

Das besonders bevorzugte Methyl-Methoxy-Siliconharz wird durch Reaktion von Methyltrichlorsilanen mit Methanol und Wasser hergestellt. Gegebenenfalls können auch Mischungen von Methyltrichlorsilan und anderen Alkyl- und/oder Arylchlorsilanen und/oder Tetrachlorsilan für die Herstellung der alkoxyfunktionellen Siliconharze verwendet werden, ohne daß die Stabilität der erfindungsgemäßen Emulsion darunter leidet. Ebenso können auch Mischungen verschiedener Alkohole für die Harzherstellung verwendet werden und/oder verschiedene alkoxyfunktionelle Siliconharze miteinander vermischt werden, ohne daß die Stabilität der Emulsion dadurch beeinträchtigt wird.

Zur Herstellung von Emulsionen aus den beschriebenen alkoxyfunktionellen Siliconharzen ist aus DE-A-3 323 909 bekannt.

Als katalytisch wirksame Substanzen (Katalysatoremulsion) für die Vernetzungsreaktion zwischen Si-OH endgestoppten Polydimethylsiloxanen und den aminofunktionellen Siliconen in Emulsion eignen sich solche, die in der bekannten Literatür für Kondensations- und Veresterungsreaktionen beschrieben sind. Die Katalysatoren werden in den in dieser Literatur beschriebenen üblichen Konzentrationen eingesetzt.

### B. Unter Addition miteinander vernetzende Siliconsysteme

Bei diesen Systemen handelt es sich um eine Emulsion B, umfassend ein Gemisch aus einer Emulsion, die ein wenigstens zwei ungesättigte Kohlenwasserstoffgruppen aufweisendes Organopolysiloxan B-1 und einer Emulsion, die ein Methylhydrogenpolysiloxan B-2 neben einem Katalysator enthält.

Die Emulsion B, hergestellt aus den Emulsionen B-1 und B-2, enthält 20 bis 80 Gew.-%, vorzugsweise 30 bis 60 Gew.-% Silicon, bezogen auf die Emulsion B.

Die wenigstens zwei ungesättigte Kohlenwasserstoffgruppen aufweisende Organopolysiloxan B-1 im Sinne der Erfindung ist vorzugsweise ein cyclisches, lineares oder verzweigtes Polysiloxan, das Einheiten der allgemeinen Formel

(R⁵)_{f}(R⁶)ₕSiO_{(4-f-h)/2} (VI)

aufweist,
mit R⁵ = C₂-C₈-Alkenyl und/oder ungesättigte C₃-C₁₀-Etherreste, wie z.B. Vinyl, Allyl, 1-Butenyl, 1-Hexenyl und/oder -CH₂-CH₂CH₂OCH₂CH = CH₂ etc.,
R⁶ = einwertige, gesättigte gegebenenfalls substituierte Kohlenwasserstoffreste mit bis zu 10 Kohlenstoffatomen aus der Gruppe der substituierten und unsubstituierten Alkyl-, Aryl-, und Arylaklyreste, wobei
f und h ganze Zahlen in folgenden Grenzen sind: 0≤f≤3 bzw. 0≤h≤3 und 0≤f+h≤4 und jedes einzelne R⁵ bzw. R⁶ innerhalb des Moleküls gleich oder ungleich sein kann.

Bevorzugt ist R⁵ = Vinyl- oder Allyl, besonders bevorzugt Vinyl.

Beispiele für R⁶ sind Methyl, Ethyl, Propyl, Isopropyl, Butyl, Octyl, usw., Cyclobutyl, Cyclopentyl, Cyclohexyl, usw., Phenyl, Tolyl, Xylyl, Naphthyl, usw., Benzyl, Phenylethyl, Phenylpropyl. In einer Ausführungsform der Erfindung sind einige oder alle der Wasserstoffatome Alkyl-, Aryl-, und Arylakylradikale R⁶ durch Fluor- und/oder Chlor-, Brom-, bzw. Iodatome und/oder Cyanoradikale substituiert. In diesem Fall entspricht R⁶ beispielsweise Chlormethyl-, Trifluoropropyl-, Chlorophenyl-, Dibromophenyl-, β-Cyanoethyl, β-Cyanopropyl oder γ-Cyanopropylresten. Bevorzugt sind jedoch mindestens 90% der Reste R⁶ Methyl.

In einer bevorzugten Ausführungsform der Erfindung ist f gleich 0 oder 1.

Mit der dem Fachmann geläufigen Nomenklatur mit
M = (CH₃)₃SiO_{1/2},
D = (CH₃)₂SiO_{2/2}
T = (CH₃)SiO_{3/2}
M^{vi}= (CH₂=CH)(CH₃)₂SiO_{1/2} und
D^{vi} = (CH₂=CH)(CH₃)SiO_{2/2} lassen sich folgende Beispiele für die Komponente B-1 angeben:
M₂D₁₀₀D^{vi}₃; M^{vi}₂D₁₈₀, M^{Vi}MD₁₀₀D^{vi}₃, T₅D₅₅₀M^{vi}₇, T₃D₅₀₀M^{vi}₂M₃ und/oder T₆D₃₀₀D^{Vi}M₄M^{vi}₄.

Der molare Anteil an ungesättigten Resten des Typs R⁵ kann beliebig gewählt werden.

In der Komponente B-1 sollte bevorzugt der molare Anteil an ungesättigten Resten des Typs R 0,01 und 10 mmol/g, besonders bevorzugt zwischen 0,05 und 1 mmol/g und ganz besonders bevorzugt 0,1 bis 0,7 mmol/g der Komponente B-1 betragen. Die Viskosität der Komponente B-1 beträgt vorzugsweise zwischen 10 und 100 000 mPa·s, besonders bevorzugt 50-10 000 mPa·s, bei 25°C.

In einer bevorzugten Ausführungsform der Erfindung werden als Komponente B-1 die in DE-A-43 28 657 beschriebenen Organopolysiloxane eingesetzt, da diese verzweigt sind, dort das Verhältnis der Anzahl der Diorganosiloxyeinheiten (D-Einheiten) zur Anzahl der Verzweigungsstellen durchschnittlich 15 und 40 beträgt, dort mindestens eine Trioganosiloxyeinheit (M-Einheit) und maximal die Hälfte aller M-Einheiten von ungesättigten Resten frei sind, die restlichen M-Einheiten nur je einen ungesättigten Rest tragen, und der Gehalt an ungesättigten Resten 0,1 bis 1 mmol/g beträgt.

Die Verzweigungsstellen der Komponente B-1 sind vorzugsweise Monoorganosiloxyeinheiten, d.h. trifunktionelle Siloxyeinheiten (T-Einheiten), die jedoch teilweise auch durch tetrafunktionelle Siloxyeinheiten (SiO_{4/2}-Einheiten, Q-Einheiten) ersetzt sein können.

Die von ungesättigten Resten freien Endgruppen des verzweigten Organopolysiloxans erfüllen die Funktion eines internen Weichmachers. Über die Anzahl der von ungesättigten Resten freien Endgruppen (M-Einheiten) kann die Flexibilität des vernetzten Films gesteuert werden.

Beispiele für die bevorzugte Komponente B-1 sind Verbindungen der Formeln

T₅D₂₀₀M^{vi}₅M₂, T₇D₂₈₀M^{vi}₅M₄,

T₆D₁₈₀D^{vi}₂M^{vi}₄M₄ und/oder T₈D₂₅₀M^{vi}₇M₃.

Verzweigte wenigstens zwei ungesättigte Kohlenwasserstoffgruppen aufweisende Organopolysiloxane B-1 können nach üblichen Verfahren hergestellt werden, wie z.B. B durch Hydrolyse von Chlorsilanen und anschließender Polymerisation mit niedermolekularen cyclischen Diorganopolysiloxanen.

Das Methylhydrogenpolysiloxan B-2 enthält vorzugsweise Einheiten der allgemeinen Formel

Hⱼ(R⁷)ₖSiO_{(4-i-k)/2} (VII)

mit R⁷ = einwertige, gesättigte gegebenenfalls substituierte Kohlenwasserstoffreste mit bis zu 10 Kohlenstoffatomen aus der Gruppe der substituierten und unsubstituierten Alkyl-, Aryl-, Arylalkyl- und/oder C₂-C₈-Alkenylreste, wobei
j und k ganze Zahlen sind mit 0 ≤ k ≤ 3 und 0 ≤ j ≤ 2 sowie 0 ≤ j+k ≤ 4, bevorzugt 0 ≤ j ≤ 1.

Die Methylhydrogenpolysiloxane B-2 sind vorzugsweise linear. Mindestens die Hälfte der D-Einheiten weisen vorzugsweise direkt an Silicium gebundene Wasserstoffatome (H(CH₃)SiO-Gruppen) auf Vorzugsweise beträgt die Anzahl der direkt an Silicium gebundenen Wasserstoffatome aufweisenden Gruppen zwischen 70 und 85 % der difunktionellen Einheiten.

Der molare Anteil von direkt an ein Siliciumatom gebundenen Wasserstoffatomen in der Komponente B-2 kann - im Rahmen der oben genannten strukturellen Einschränkungen - beliebig gewählt werden.

In der Komponente B-2 liegt vorzugsweise der molare Anteil von direkt an ein Siliciumatom gebundenen Wasserstoffatomen zwischen 0,01 und 17 mmol, besonders bevorzugt zwischen 0,1 und 17 mmol und ganz besonders bevorzugt zwischen 1 und 17 mmol/g der Komponente B-2.

Beispiele für die Komponente B-2 sind Verbindungen der Formeln

M^{H}₂D₁₀, M₂D₁₀D^{H}₁₀, M^{H}₂D^{H}₂₀D₁₀,

M^{vi}₂D^{H}₁₁ und/oder M₂D^{vi}₃D^{H}₈ mit

M^{H} = H(CH₃)₂SiO_{1/2} und

D^{H} = H(CH₃)SiO_{2/2}.

Vorzugsweise liegen die Komponenten B-1 und B-2 in der wässrigen Emulsion B in einem solchen Mengenverhältnis vor, daß das molare Verhältnis von direkt an ein Siliciumatom gebundenen Wasserstoffatom (SiH) in der Komponente B-2 zu den ungesättigten Resten (Si-Vinyl) in der Komponente B-1 zwischen 0,05 und 20, besonders bevorzugt zwischen 0,5 und 10 und ganz besonders bevorzugt zwischen 1 und 3, beträgt.

Die Emulsion B kann ferner ein Organopolysiloxan enthalten, das Einheiten der allgemeinem Formel

(R⁷)ᵣSiO_{(4-r)/2} (VIII)

enthält,
wobei R⁷ einwertige, gesättigte gegebenenfalls Kohlenwasserstoffreste substituierte mit bis zu 10 Kohlenstoffatomen aus der Gruppe der substituierten und unsubstituierten Alkyl-, Aryl-, und Arylalkylreste sind, die innerhalb des Moleküls gleich oder verschieden sein können und r ganze Zahlen zwischen 0 und 3 annehmen kann.

Bevorzugt ist als Organopolysiloxan ein lineares, mit Trimethylsiloxygruppen endgestopptes Polydimethylsiloxan, wie es beispielsweise von der Bayer AG unter der Bezeichnung Baysilone®-Öle M vertrieben wird. Besonders bevorzugt ist der Einsatz von solchen Baysilone®-Ölen M mit einer Viskosität zwischen 50 mm²s⁻¹ und 5 000 mm²s⁻¹.

Die Emulsion B enthält ferner einen Katalysator aus der Platingruppe, vorzugsweise die Elemente Platin, Rhodium, Iridium, Nickel, Ruthenium und/oder Palladium, elementar, auf einer Trägersubstanz oder in Form ihrer Verbindungen. Bevorzugt sind Platinverbindungen oder Platinkomplexe, wie z.B. H₂PtCl₆, Platin-Olefinkomplexe, Platin-Alkoholkomplexe, Platin-Vinylsiloxankomplexe oder auch elementares Platin auf einer Trägersubstanz, wie z.B. Aktivkohle, Al₂O₃ oder SiO₂. Besonders bevorzugt ist als Katalysator ein Platin-Vinylsiloxankomplex. Diese Platin-Vinylsiloxankomplexe verfügen dann vorzugsweise im Siloxan über mindestens 2 olefinisch ungesättigte Doppelbindungen. Diese sind z.B. in US-A-3 715 334 beschrieben.

Unter den Begriff Siloxan fallen hierbei Polysiloxane, d.h. z.B. auch Vinylpolysiloxane.

Der Anteil des Katalysators, bezogen auf die Summe aller Bestandteile, beträgt vorzugsweise zwischen1 und 1 000 ppm, besonders bevorzugt zwischen 1 und 500 ppm und ganz besonders bevorzugt zwischen 25 und 250 ppm.

Der Katalysator aus der Platingruppe kann beispielsweise auch in einem Teil des Polymeren B-1 vorgelöst sein.

Die Emulsion B kann ferner einen Inhibitor, geeignete Emulgatoren, Verdicker und/oder übliche Zusatz- und Hilfsstoffe (jedoch keine Füllstoffe enthalten). Im übrigen wird zur Herstellung der Emulsion B auf die EP-A-0 819 735 verwiesen.

### Wässrig-kolloidale Kieselsäure

Bei der wässrig-kolloidalen Kieselsäure (Kieselsol) handelt es sich um ein wässriges Kolloid enthaltend 15 bis 40 Gew.-%, vorzugsweise 25 bis 35 Gew.-% Kieselsäure mit einem mittleren Teilchendurchmesser von 6 bis 50 nm, vorzugsweise von 7 bis 15 nm. Derartige kolloidale Kieselsäuresysteme sind dem Fachmann aus der Literatur bekannt und im Handel erhältlich.

Die erfindungsgemäße wäßrige Trennmittelemulsion enthält
5 bis 35 Gew.-%, vorzugsweise 8 bis 24 Gew.-% der oben beschriebenen Silicon-Emulsion A oder B sowie 0,5 bis 5 Gew.-%, vorzugsweise 0,8 bis 4 Gew.-% der oben beschriebenen wässrig-kolloidalen Kieselsäure, bezogen auf die Gesamtemulsion.

Der Gesamtsilikon-Gehalt in dem erfindungsgemäßen Trennmittel beträgt 2 bis 20 Gew.-%, vorzugsweise 5 bis 15 Gew.-%, bezogen auf das Trennmittel.

Zusätzlich kann die erfindungsgemäße Emulsion, unabhängig voneinander, Keimverhütungsmittel bzw. fäulnisverhindernde Mittel (Bakterizide), zusätzliche Netzmittel, Verdicker, Stabilisatoren, zusätzliche Emulgatoren, Entschäumer, Korrosionsinhibitoren sowie Farbstoffe, vorzugsweise organische Farbstoffe insbesondere UV-aktivierbare Farbstoffe enthalten.

Im einzelnen kann die erfindungsgemäße Emulsion
- 0,01 bis 0,1 Gew.-%, vorzugsweise 0,03 bis 0,06 Gew.-% von üblichen Keimverhütungsmitteln,
- 0,1 bis 1 Gew.-%, vorzugsweise 0,3 bis 0,7 Gew.-% von Verdickern/Stabilisatoren, insbesondere Polysaccharide,
- 0,1 bis 2 Gew.-%, vorzugsweise 0,3 bis 0,6 Gew.-% von Netzmitteln, vorzugsweise nicht-ionischen Netzmitteln, welche beim Besprühen der Oberflächen eine homogene Verteilung (Sprühbild) durch bessere Benetzung herbeiführen,
- 0,5 bis 4 Gew.-%, vorzugsweise 0,8 bis 2 Gew.-% von Polyethylenwachsen, insbesondere harten Polyethylenwachsen mit einer durchschnittlichen Teilchengröße von 1 bis 9 µm und einem Schmelzpunkt zwischen 90 und 110°C,
- 0,1 bis 4 Gew.-%, vorzugsweise 0,3 bis 2 Gew.-% von Polytetrafluoroethylen-Mikropulvern (Wachse), die beispielsweise aus der DE-A-40 24 565 bekannt sind und eine Molmasse zwischen 30 000 und 200 000 und eine mittlere Teilchengröße von 1 bis 20 µm aufweisen
enthalten.

Die erfindungsgemäße Trennmittelemulsionen können nach üblichen, dem Fachmann bekannten Verfahren aus den jeweiligen Einzelkomponenten zusammengemischt werden.

Die zur Anwendung kommende Emulsion weist eine Viskosität (DIN 53211, Ford-Becher 4 mm) von 20 bis 80 Sekunden, vorzugsweise von 30 bis 60 Sekunden auf.

Die erfindungsgemäße Zusammensetzung wird vorzugsweise als Formtrennmittel bei der Vulkanisation eingesetzt. Hierbei wird das Formtrennmittel vor dem Einfügen des Heizbalgs (Bladder) in das Innere des (grünen) Reifenrohlings auf den Heizbalg (Heizmembran) und/oder den Innenliner des Reifenrohlings aufgesprüht. Die aufgetragene Menge an Formtrennmittel liegt dabei zwischen 8 und 50 g/m², vorzugsweise zwischen 11 und 25 g/m² der besprühten Oberfläche. Die benötigte Menge an aufgesprühtem Formtrennmittel pro herkömmlichen PKW-Reifen beträgt 6 bis 40 g, vorzugsweise 8 bis 18 g.

Anschließend wird der Heizbalg in den Reifen eingefahren. Die Heizmembran beheizt den Reifenrohling und drückt ihn gleichzeitig unter hohem Druck in die Negativform, wobei es zur Vulkanisation kommt. Dann wird der Heizbalg wieder aus dem Reifen entfernt.

Die Verwendung der erfindungsgemäßen Zusammensetzung in dem oben beschriebenen Verfahren der Vulkanisation von Reifen als Formtrennmittel hat die Vorteile, daß der Heizbalg nicht nur leicht in den Reifenrohling eingeleitet und auch wieder zu entnehmen ist, sondern daß auch die zwischen Heizbalg und Reifen-Innenliner Luft restlos aus dem Zwischenraum, bedingt durch die Bildung feiner Risse in der sich bildenden halbelastischen Beschichtung entweicht. Eingeschlossene Luft bedeutet Ausschußreifen, da unter der Luftblase keine ausreichende Vulkanisation stattfindet. Darüber hinaus ist der Heizbalg problemlos vom vulkanisierten Reifen zu trennen. Ferner ist es möglich, mit den erfindungsgemäßen Trennmittelzusammensetzungen bei variablen Sprühungen nicht jeden Reifen zu sprühen. Bedingt durch den Einsatz von unter Vulkanisationsbedingungen vernetzenden Silicon-Komponenten können die Separationen an den Reifenstößen ausgeschaltet werden. Weiterhin baute sich ein Teil der Beschichtung auf dem Heizbalg auf und beeinflußte die Balgstandzeit positiv. Es besteht auch die Möglichkeit, neue Heizbälge mit dem Trennmittel zusätzlich zu beschichten, um den Start neuer Heizbälge in den Pressen zu erleichtern.

Insgesamt kann durch die Verwendung der erfindungsgemäßen Trennmittel nicht nur die Qualität der Reifen und der Reifenausschuß verbessert werden, sondern auch die Kosten pro Reifen und die Verunreinigungen (Anlagenverschmutzung/Abfallreduzierung) drastisch reduziert werden, als unmittelbare Folge der geringeren Menge an einzusetzenden Sprühlösungen.

Die Erfindung wird durch die nachfolgenden Beispiele näher erläutert.

### Beispiele:

### Trennmittelzusammensetzung gemäß dem Stand der Technik - wäßrige Dispersionen einer Reifeninnensprühlösung:

| Si-Öl-Emulsionen: | Gew.-% |
|---|---|
| Si-Öl, Visk. (1-1000 m²/s) 100 - 100.000 cSt | 5 - 15 % |

| Füllstoffe: | |
|---|---|
| Ruß | 1 - 2 % |
| Glimmer, Talkum o.a. | 20 - 40 % |
| Glykole, Netzmittel | 10 - 20 % |
| Wasser | Rest |
| Sprühmenge pro PKW-Reifenrohling | 16 - 30 g |

Nach dem Stand der Technik werden in einen PKW-Reifenrohling durchschnittlich 22 g wäßrige Innensprühlösung enthaltend ca. 40 - 60 % Wirkstoff (alle Bestandteile außer Wasser) gleichmäßig gesprüht. Das entspricht ca. 11 g Wirkstoff/PKW-Reifen. Rechnet man die Mengen Overspray von ca. 25 - 30 %, die den Reifenrohling nicht erreichen, ab, so verbleiben ca. 8 g Wirkstoff/PKW-Reifen. Die einzelnen Bestandteile, die nachfolgend in der Aufstellung in g/PKW-Reifenrohling angegeben sind, erfüllen folgende Anforderungen:

| | | Einformung | | Entformung | |
|---|---|---|---|---|---|
| Wirkstoffe | g/PKW-Reifenrohling | Gleitwirkung | Entlüftung | Trennwirkung/Gleitwirkung | Balghaltbarkeit |
| Si-Öl | ca. 0,96 | X | | X | X |
| Glykole + Tenside | ca. 1,44 | X | | X | X |
| Mineral. Füllstoffe + Ruße | ca. 5,6 | | X | | |
| Summe | ca. 8,0 | | | | |

In den nachfolgenden Experimenten wurden die folgenden Komponenten verwendet:
Proxel® GXL ist ein Bakterizid (Handelsprodukt der ICI).
Kelzan® D ist ein Polysaccharid, welches als Verdicker und Stabilisator wirkt (Handelsprodukt von Langer & Co.)
Bei Levasil® 200A30 (Handelsprodukt von Bayer AG) handelt es sich um ein Kieselsol mit 30 Gew.-% SiO₂ und einer spezifischen Oberfläche von 200 m²/g. Die Teilchengröße beträgt 7 bis 15 nm. Levasil® 200 A30 bewirkt in der Formulierung bessere Aushärtung und trägt bei Dehnung zur Rißbildung der Beschichtung bei, was wiederum die Entlüftung positiv beeinflußt.
Lanco® Wachs PEW 1555 (Handelsprodukt von Langer & Co.) ist ein hartes Polyethylenwachs mit durchschnittlicher Teilchengröße 2,5 µm, Schmelzpunkt 102°C.
Rewopal® LA 6 (Handelsprodukt von Rewo) ist ein nichtionisches Netzmittel, welches beim Sprühen eine homogene Verteilung (Sprühbild) durch bessere Benetzung auf der Innerliner-Mischung herbeiführt.
Ölemulsion 1 (vgl. Beispiel 1) ist Baysilon® N (Bayer AG)
Ölemulsion 2 (vgl. Beispiel 2) ist Baysilon® VP AI 3632 (Bayer AG)
Ölemulsion 3 (vgl. Beispiel 2) ist Baysilon® VP AI 3628 Z 343 (Bayer AG)
Ölemulsion 4 (vgl. Beispiel 2) ist Baysilon® VP AI 3629 Z 344 (Bayer AG)

### Beispiel 1: Versuch mit dem kondensationsvernetzenden System

| **Bestandteile** | **Gew.-%** |
|---|---|
| Wasser | 83,10 |
| Proxel® GXL (Keimverhütungsmittel) | 0,05 |
| Kelzan® D (Verdicker) | 0,45 |
| Rewopal® LA 6 (Emulgator) | 0,40 |
| Ölemulsion 1 | 6,50 |
| Ölemulsion 2 | 6,50 |
| Lanco® PEW 1555 | 1,00 |
| Levasil® 200 A 30 | 2,00 |

Bei Versuchen mit der Zusammensetzung gemäß Beispiel 1 wurden ca. 13 g Produkt gesprüht. Der Wirkstoffgehalt (prozentualer Anteil aller Bestandteile in der Zusammensetzung außer Wasser) ist ca. 10 %. Berücksichtigt man die Menge Overspray von ca. 25 - 30 %, so verbleiben ca. 1,0 g Wirkstoff/Reifenrohling.

| | | Einformung | | Entformung | |
|---|---|---|---|---|---|
| Wirkstoffe | g/PKW-Reifenrohling | Gleitwirkung | Entlüftung | Trennwirkung/Gleitwirkung | Balghaltbarkeit |
| Si-Polymere | 0,8 | X | X | X | X |
| Tenside | 0,2 | X | | X | X |
| Summe | 1,0 | | | | |

In einer Reifenfabrik wurden in einem Produktionsversuch ca. 3.000 PKW-Reifen aller Reifengrößen mit dem erfindungsgemäßen kondensationsvemetzenden System produziert. Alle vulkanisierten Reifen hatten beste Qualität.

Hervorzuheben ist die totale Transparenz im Innenreifen, die es ermöglicht Kennzeichnungen (wie bar code) zu erkennen. Auch bei möglichen Überspritzungen auf die Außenseite waren keine Markierungen oder andere Fehler festzustellen.

Die Si-Polymere bilden eine hauchdünne Schicht, die bei der Vulkanisation polymerisiert, wobei der Trenneffekt teilweise aufgehoben wird (keine Trennung am Splice). Dieser Effekt wird durch Trennlastprüfungen nach DIN 53539 nachgewiesen.

Die Funktion der Entlüftung, die sonst bei füllstoffhaltigen Systemen gemäß dem Stand der Technik durch Füllstoffe erreicht wird, wird auch von der durch das erfindungsgemäße kondensationsvernetzende System gebildeten Trennschicht wahrgenommen.

### Vergleich der Sprühmengen/PKW-Reifen

| Reifen-Innensprühlösungen (Feststoffgehalt der Sprühmengen/PKW-Reifenrohling) | |
|---|---|
| Stand der Technik | Zusammensetzung nach Beispiel 1 |
| Feststoff/PKW-Reifenrohling | Feststoff/PKW-Reifenrohling |
| ca. 11 g | ca. 1,0 g |

| Si-Öl/PKW-Reifenrohling | Si-Polymere/PKW-Reifenrohling |
|---|---|
| ca. 1,32 g | ca. 0,8 g |

Der Feststoffanteil, der pro Reifenrohling gesprüht werden muß um die gewünschten Effekte zu erzielen, wird um ca. 90 % reduziert (11 g zu 1,0 g). Vergleicht man den Si-Öl- bzw. Si-Polymeranteil, so fand eine Reduktion von ca. 40 % statt (1,32 g zu 0,8 g).

Das heißt, die Wasserbelastung durch Overspray (Overspray = ca. 25 - 30 % der totalen Sprühmenge) in den Sprühanlagen wird auf genannte Mengen (< 90 % total, < 40 % Si-Öl-Polymer) reduziert, das heißt, daß die Schadstoffbelastung in gleichem Verhältnis reduziert wird.

### Beispiel 2: Versuch mit einem Pt-katalysierten Additionssystem

| **Bestandteile** | **Gew.-%** |
|---|---|
| Wasser | 77,05 |
| Proxel® GXL | 0,05 |
| Kelzan® D | 0,5 |
| Rewopal® LA 6 | 0,4 |
| Ölemulsion 3 | 9,5 |
| Ölemulsion 4 | 9,5 |
| Lanco® PEW 1555 | 1,0 |
| Levasil® 200 A 30 | 2,0 |

Es wurden ca. 200 PKW-Reifen verschiedener gängiger Größen gesprüht und vulkanisiert. Diese Ergebnisse entsprachen denjenigen, wie sie auch für das kondensationsvernetzende System erzielt wurden. Die Reifen hatten alle beste Qualität.

Diese Beispiele zeigen deutlich, daß mit den erfindungsgemäßen vernetzenden Silicon-Systemen im Vergleich zu Trennmittelsystemen des Standes der Technik bei Einsatz von weniger Wirkstoffen bessere Ergebnisse erzielt wurden.

## Patentansprüche

1. Formtrennmittel umfassend in einer wässrigen Emulsion
- ein aus wenigstens zwei miteinander unter Vernetzung reagierenden Silicon-Komponenten bestehenden System, wobei dieses System ausgewählt ist aus der Gruppe bestehend aus
(A) miteinander unter Kondensation reagierenden Silicon-Komponenten, oder
(B) miteinander unter Addition reagierenden Silicon-Komponenten, und
- einer wässrig-kolloidalen Kieselsäure (Kieselsol).

2. Formtrennmittel nach Anspruch 1, dadurch gekennzeichnet, daß das unter Kondensation reagierende Silicon-Komponenten-System (A) in einer wässrigen Emulsion ein Si-OH endgestopptes Polydimethylsiloxan (A-1) und ein zur Vernetzung befähigtes Silicon (A-2) umfaßt.

3. Formtrennmittel nach Anspruch 1, dadurch gekennzeichnet, daß das unter Addition reagierende Silicon-Komponenten-System (B) in einer wässrigen Emulsion ein wenigstens zwei ungesättigte Kohlenwasserstoffgruppen aufweisendes Organopolysiloxan (B-1) und ein Methylhydrogenpolysiloxans (B-2) umfaßt.

4. Formtrennmittel nach irgendeinem der Ansprüche 1 bis 3, dadurch gekennzeichnet, daß die wässrig-kolloidale Kieselsäure 15 bis 40 Gew.-%, bezogen auf das Kieselsol, Kieselsäure mit einem mittleren Teilchendurchmesser von 6 bis 50 nm umfaßt.

5. Formtrennmittel nach irgendeinem der Ansprüche 1 bis 3, dadurch gekennzeichnet, daß es
- 5 bis 35 Gew.-% einer Emulsion der miteinander unter Kondensation reagierenden Silicon-Komponenten (A) oder einer Emulsion der miteinander unter Addition reagierenden Silicon-Komponenten (B) und
- 0,5 bis 5 Gew.-% der wässrig-kolloidalen Kieselsäure (C),
jeweils bezogen auf die Gesamtmenge des Formtrennmittels, umfaßt.

6. Formtrennmittel nach irgendeinem der Ansprüche 1 bis 5, dadurch gekennzeichnet, daß es zusätzliche Bestandteile enthält, die ausgewählt sind aus der Gruppe bestehend aus Keimverhütungsmitteln, Fäulnis verhindernden Mitteln, Netzmitteln, Verdickern, Stabilisatoren, Entschäumern, Korrosionsinhibitoren und Farbstoffen.

7. Verfahren zur Vulkanisation von pneumatischen Reifen, dadurch gekennzeichnet, daß man auf den Heizbalg und/oder den Reifenrohling das Formtrennmittel, wie in einem oder mehreren der Ansprüche 1 bis 6 definiert, vor der Vulkanisation aufträgt.

8. Verfahren nach Anspruch 7, dadurch gekennzeichnet, daß das Auftragen durch Sprühen oder Streichen erfolgt.

9. Verfahren nach Anspruch 7 oder 8, dadurch gekennzeichnet, daß die aufgetragene Menge des Formtrennmittels 5 bis 50 g/m² beträgt.

10. Verwendung einer Zusammensetzung umfassend in einer wässrigen Emulsion
- ein aus wenigstens zwei miteinander unter Vernetzung reagierenden Silicon-Komponenten bestehenden System, wobei dieses System ausgewählt ist aus der Gruppe bestehend aus
(A) miteinander unter Kondensation reagierenden Silicon-Komponenten, oder
(B) miteinander unter Addition reagierenden Silicon-Komponenten, und
- einer wässrig-kolloidalen Kieselsäure
als Formtrennmittel.

11. Verwendung nach Anspruch 10 bei der Herstellung von pneumatischen Reifen.

12. Verwendung nach Anspruch 11 zur Beschichtung des Heizbalgs und/oder des Innenliners vor der Vulkanisation des Reifenrohlings.

13. Verwendung nach irgendeinem der Ansprüche 10 bis 12 in einer Menge von 8 bis 50 g/m² der zu beschichtenden Oberfläche.
